# EUROPÄISCHE PATENTSCHRIFT

(11) **EP 1 084 871 B1**
(45) Veröffentlichungstag und Bekanntmachung des Hinweises auf die Patenterteilung: **26.11.2003**
(21) Anmeldenummer: 00119960.3
(22) Anmeldetag: 14.09.2000
(51) Int. Cl.: B60D 1/06, B60D 1/54

(54) **Anhängerkupplung mit axialem Verfahrweg**
Trailer coupling with axial deplacement
Attelage de remorque à déplacement axial

(30) Priorität: 15.09.1999 DE 19944264
(43) Veröffentlichungstag der Anmeldung: 21.03.2001
(73) Patentinhaber: Jaeger Cartronix GmbH, 61169 Friedberg (DE)
(72) Erfinder: Lüttmer, Hanno, 24837 Schleswig (DE); Grossmann, Ralf, 24837 Schleswig (DE)
(74) Vertreter: KEIL & SCHAAFHAUSEN

(56) Entgegenhaltungen:
- DE-A- 10 004 523
- DE-U- 29 520 254
- US-A- 2 544 185
- US-A- 3 717 362
- US-A- 4 744 583

## Beschreibung

Die Erfindung betrifft eine Anhängerkupplung für Kraftfahrzeuge, mit einer Stange, an der sich üblicherweise eine Kugel befindet, wobei die Stange als bewegliches Teil zwischen zwei Endlagen, nämlich zwischen einer Ruhestellung und einer Betriebsstellung, mittels eines Motors axial in Richtung der Stange verstellbar ausgebildet ist, wobei zwischen der Ruhestellung und der Betriebsstellung ein Schwenkwinkel vorgesehen ist.

Solche Anhängerkupplungen sind aus dem deutschen Gebrauchsmuster DE 295 20 254 bekannt. Außerdem ist aus der US 4,744,583 eine axial ausfahrbare Anhängerkupplung bekannt, die motorisch angetrieben ist.

Nachteilig an den bekannten Kupplungen ist, das sie nur beschränkte Einsatzmöglichkeiten bieten und deshalb speziell an den jeweiligen Fahrzeugtyp konstruktiv mit hohem Aufwand anzupassen sind.

Aufgabe der Erfindung ist es, eine Anhängerkupplung mit axialem Verstellweg so weiterzubilden, dass der Anpassungsaufwand vermindert werden kann und ein größeres Einsatzspektrum erreicht wird.

Diese Aufgabe wird dadurch gelöst, dass die Ruhestellung und die Betriebsstellung eine Einfahrrichtung aufweisen, die gleichsinnig ausgebildet ist.

Insbesondere im Zusammenhang mit der Ausgestaltung, dass die Stange einen Gesamtverstellweg aufweist, der größer ist als der axiale Abstand zwischen der Ruhestellung und der Betriebsstellung, weist die Anhängerkupplung einen räumlich besonders weiten Aktionsbereich auf, in dem die Lage der Betriebsstellung weitgehend frei gewählt werden kann. Dies ist bedeutsam, da je nach Einbaugegebenheiten zwischen der Ruhestellung und der Betriebsstellung Hindernisse von der Stange umfahren werden müssen und der Befestigungsort an dem Fahrzeug und die möglichen Einbauverhältnisse je nach Fahrzeugtyp sehr unterschiedlich sind.

Beispielsweise kann es sehr vorteilhaft sein, wenn die Anhängerkupplung einen Schwenkwinkel um die Achse der Stange von etwa 180° aufweist. Dies trifft insbesondere dann zu, wenn die Stange eine Achse aufweist, die etwa vertikal angeordnet ist.

In diesen Einbaufällen ist häufig mit Vorteil vorgesehen, dass die Ruhestellung und die Betriebsstellung in derselben zur Achse der Stange senkrechten Ebene angeordnet ist. In solchen Fällen kann beispielsweise die Anhängerkupplung so eingebaut werden, dass sie aus einer Position hinter der Stoßstange eines Fahrzeugs vor die Stoßstange geschwenkt werden kann.

In anderen Fällen reicht es vorteilhaft aus, wenn der Schwenkwinkel etwa 90° beträgt.

Es sind jedoch auch Einbausituationen denkbar, bei denen die Ruhestellung und die Betriebsstellung in Stangenachse unterschiedlich angeordnet sind. In solchen Fällen ist es von besonderem Vorteil, wenn sie um die Stangenachse eine Drehbewegung zwischen der Ruhestellung und der Betriebsstellung aufweist, die durch eine Kurve geführt ausgebildet ist, da dann diese Stellungen axial bestimmt sind und auftretende Kräfte über Anschläge auf dem kürzesten Wege in das Fahrzeugchassis eingeleitet werden können.

Eine vorteilhaft präzise Bewegung ergibt sich dadurch, dass getrennte axiale Anschläge für die Ruhestellung und die Betriebsstellung vorgesehen sind.

Mit der Kurve lässt sich beispielsweise sowohl die Drehbewegung um die Stangenachse als auch dieselbe Einfahrrichtung für die Ruhestellung und die Betriebsstellung dadurch erreichen, dass die Kurve mindestens einen Abzweig aufweist.

Durch den Abzweig in der Kurve ergeben sich unterschiedliche Führungsabschnitte, die willkürlich angefahren werden können, wenn am Abzweig eine Weiche mit einer steuerbaren, z. B. als Sperre ausgebildeten Führung vorgesehen ist, insbesondere wenn diese mechanisch ist.

Die Weiche lässt sich mit Vorteil dadurch ersetzen, wenn eine Kulisse vorgesehen ist, die von der Kurve geführt ist, wobei die Kulisse schaltbar ausgebildet ist. Die Führungskurve kann dann beispielsweise in einzelne getrennte Abschnitte aufgeteilt sein, die jeweils durch die entsprechend eingeschaltete Kulisse abgetastet werden. Im einfachsten Fall durchsetzt eine Kulisse mit einer Länge, die den Durchmesser der Stange überragt, die gesamte Stange quer zur Achsrichtung. In den Endlagen wird die Kulisse von einer geeigneten Mechanik oder durch einen Elektromagneten so geschaltet, dass sie jeweils nur zu der gewünschten Seite vorsteht und in dort getrennt vorgesehene Führungskurven eingreift.

Eine mechanische Weiche kann wesentlich vereinfacht werden, wenn die Drehrichtung der Stange aus der Ruhestellung in die Betriebsstellung gleich ausgebildet ist, da dann eine einfache federnde Weichenzunge ausreicht.

Insbesondere in Verbindung mit einer Ausgestaltung bei der für die axiale Verstellung der Stange ein Spindel-Mutter-Trieb vorgesehen ist, dessen Drehrichtung der Spindel beim Ausfahren der Stange dieselbe Richtung wie die Schwenkrichtung der Stange aufweist, kann mit Vorteil ganz auf eine Weiche verzichtet werden, da sich dann die Kulisse jeweils an den richtigen Rand der Führung anlegt. Dabei ist es im Falle einer elektrischen Fehlfunktion von Vorteil, wenn ein Wellenende vorgesehen ist, an dem die Stange mittels Handkurbel verstellbar ist.

Die Erfindung wird in einer bevorzugten Ausführungsform unter Bezugnahme auf Zeichnungen näher beschrieben, dessen Figuren vorteilhafte Einzelheiten zu entnehmen sind. Funktionsmäßig gleiche Teile sind dabei mit denselben Bezugszeichen versehen.

Die Zeichnungen zeigen im einzelnen:
- Fig. 1: eine Seitenansicht einer erfindungsgemäßen Anhängerkupplung,
- Fig. 2: eine andere Seitenansicht der erfindungsgemäßen Anhängerkupplung aus Fig. 1,
- Fig. 3: eine Aufsicht auf eine schematisch dargestellte Weiche,
- Fig. 4: eine schematische Abwicklung von Führungskurven und
- Fig. 5: einen Schnitt durch eine Stange mit schaltbarer Kulisse.

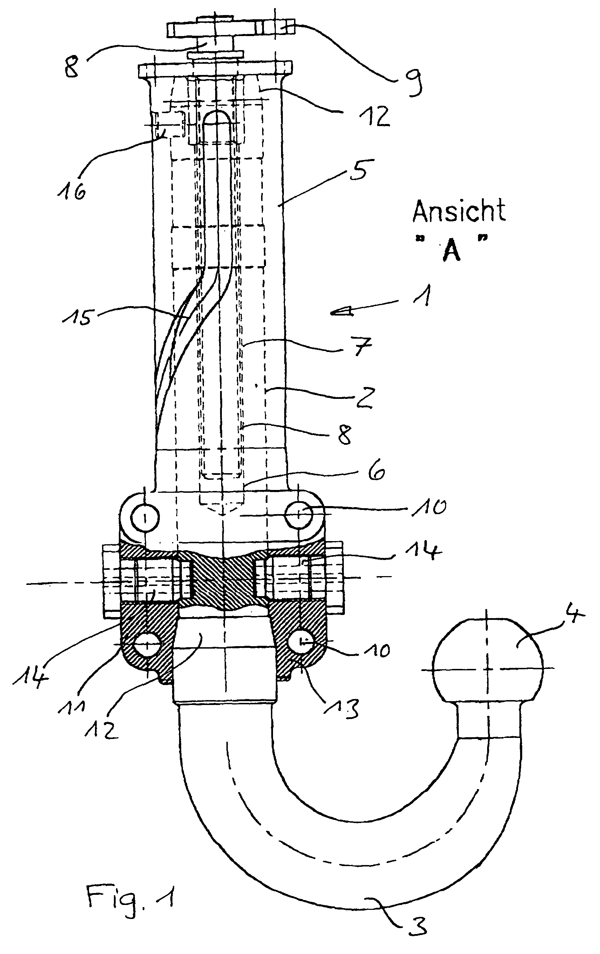

In Figur 1 bezeichnet 1 eine verstellbare Anhängerkupplung. Sie hat im wesentlichen eine axial verstellbare Stange 2, die in unterbrochener Linienführung dargestellt ist, und deren unteres Ende 3 um 180° gebogen ist, welches in einer Kugel 4 ausläuft. Natürlich kann die Anhängerkupplung beispielsweise auch horizontal eingebaut werden. Dann ist das die Kugel 4 tragende Ende nur um 90° gebogen.

Die Stange 2 ist in einer Führungshülse 5 in Längsrichtung verschiebbar und um ihre Achse drehbeweglich aufgenommen. In der Stange 2 ist eine axiale Bohrung 6 mit einem Innengewinde 7 vorgesehen. In schraubbarer Verbindung greift eine zentrale Verstellspindel 8 ein, die von einem nicht dargestellten Motor über ein am oberen Ende vorgesehenes Stirnradgetriebe 9 antreibbar ist.

Die gesamte Anhängerkupplung 1 wird an einem Fahrzeug montiert, indem sie mittels Schrauben, die durch Befestigungsöffnungen 10 des Montageflansches 11 greifen, mit dem Fahrzeug verschraubt wird.

in der in Figur 1 dargestellten Endlage ist die Stange 2 über einen Konus 12 in einem Gehäuse 13 mit entsprechender Gegenfläche fixiert. Eine zusätzliche Sicherung in dieser Lage erfolgt über mechanische oder elektromagnetisch betätigte Verriegelungsbolzen 14, die in entsprechende Bohrungen eingreifen. Denkbar ist hier auch beispielsweise eine Dreikugelverriegelung. Die Verriegelungsbolzen 14 sichern die Stange 2 auch in der Ruhestellung formschlüssig.

Zur Steuerung der axialen Bewegung der Stange 2 ist in die Führungshülse 5 eine als Schlitz geformte Führungskurve 15 eingearbeitet, in die eine stiftförmige Kulisse 16 eingreift, die fest mit der Stange 2 verbunden ist.

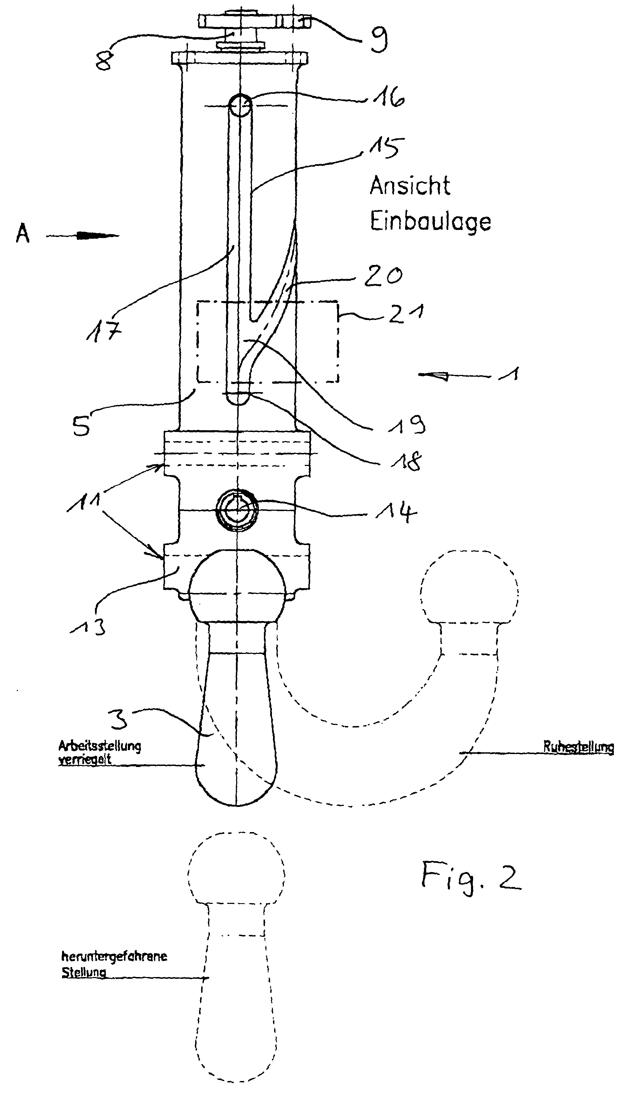

Figur 2 zeigt die Anhängerkupplung aus einer anderen Seitenansicht. Die Kulisse 16 befindet sich am oberen Ende der Kurve 15 in der Betriebsstellung. Beim Wechsel aus einer Stellung in die andere durchfährt die Kulisse 16 einen ersten Zweig 17 bis sie am Ort 18 ihre äußerste axiale Lage einnimmt. Das untere Ende 3 der Stange 2 ist in unterbrochener Linienführung dargestellt. Der Motor wird dann umgepolt, so dass die Stange 2 wieder nach oben fährt. Am Ort 19 verzweigt die Kurve 15 in einen zweiten Zweig 20, in den die Kulisse 16 einfährt und dabei die Stange 2 um ihre Längsachse schenkt, bis die Stange 2 in der oberen Endlage ihre in unterbrochener Linienführung dargestellte Ruhestellung einnimmt, die von dem Ende des zweiten Zweiges 20 bestimmt ist.

Im gezeichneten Fall liegt die Ruhestellung in derselben Ebene wie die Betriebsstellung. Sie kann aber auch verschieden sein. In solchen Fällen werden die Endanschläge in geeigneter Form modifiziert, der Konus 12 also als keilförmiges Prisma ausgebildet.

Das Einfahren in die andere Stellung erfolgt in umgekehrter Weise.

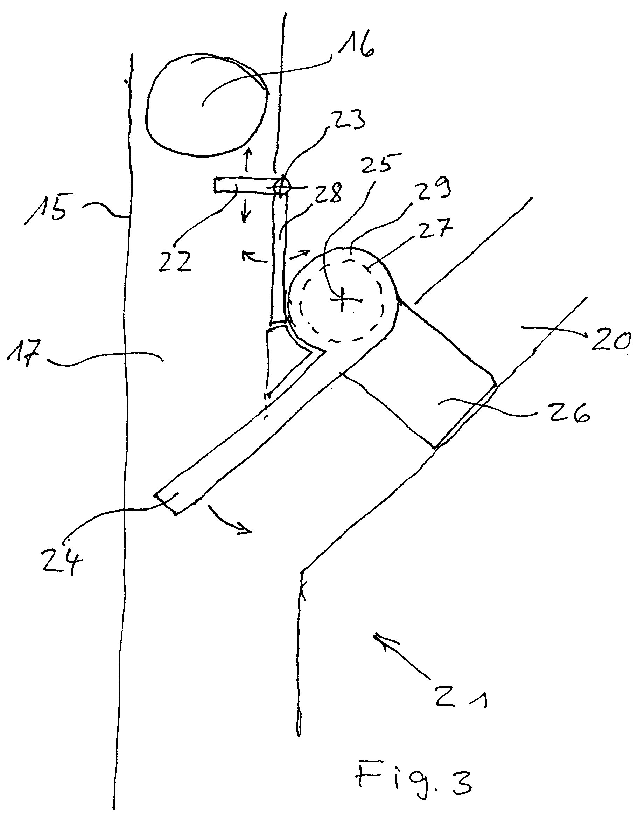

Damit sichergestellt wird, dass die Kulisse 16 auch in den zweiten Zweig 20 der Kurve 15 einfährt, ist eine mechanisch schaltende Weiche 21 über dem Abzweig am Ort 19 vorgesehen, deren Funktion anhand von Figur 3 in einer schematischen Aufsicht erläutert wird.

In Figur 3 durchfährt die Kulisse 16 die Kurve 15 zunächst von oben nach unten. Dabei passiert sie einen Freigabehebel 22, der um eine Achse 23 gegen die Kraft einer Rückstellfeder schwenkbar ist, so dass die Kulisse 16 passieren kann. Danach drückt sie die Weichenzunge 24 gegen die Kraft einer weiteren Rückstellfeder zur Seite und passiert auch diese, wobei die Weichenzunge 24 um eine Achse 25 schwenkt. Bei der Fahrt der Kulisse 16 von unten nach oben, lenkt die Weichenzunge 24 die Kulisse 16 in den zweien Zweig 20 bis sie auf den Auflaufkeil 26 trifft. Dieser weicht gegen die Kraft einer Rückstellfeder in Richtung einer Achse 25 nach oben aus und nimmt eine Welle 27, an welcher der Auflaufkeil 26 und die Weichenzunge 24 befestigt sind, solange mit, bis eine Sperrklinke 28 unter einen an der Welle 27 vorgesehenen Bund 29 von der Kraft einer Feder getrieben einrastet und in dieser Position die Welle 27 in ihrer axialen Position verriegelt. Die Weichenzunge 24 und der Auflaufkeil 26 haben dabei eine Höhenlage erreicht, dass sie von der Kulisse 16 unterfahren werden können.

Beim Zurückfahren der Kulisse 16 aus dem zweiten Zweig 20 wird somit zunächst der Auflaufkeil 26 unterfahren. Nach der Umkehr aus der unteren Extremlage wird dann auch die Weichenzunge 24 unterfahren. Die Drehrichtung und das Gewinde der Verstellspindel 8 sind vorteilhaft dabei so gewählt, dass sich die Kulisse 16 infolge der zwischen der Verstellspindel 8 und der Stange 2 auftretenden Gewindereibung an die linke Seite der Kurve 15 anlegt.

Bei Erreichen des als Klinke ausgebildeten Freigabehebels 22 weicht dieser gegen die Kraft einer Rückstellfeder nach oben aus und nimmt mittels eines geeignet vorgesehenen Anschlags die Sperrklinke 28 mit. Die Sperrklinke 28 gibt dabei den Bund 29 frei, so dass die Welle 27, durch die Rückstellfeder getrieben, wieder ihre ursprüngliche Lage einnimmt. Ein neues Arbeitsspiel kann dann beginnen.

Diese Ausführungsform ist besonders vorteilhaft, wenn ein Schwenkwinkel von etwa 90° gewünscht wird und die Stange 2 aus einer Stellung in die andere auf demselben Weg zurückkehren soll.

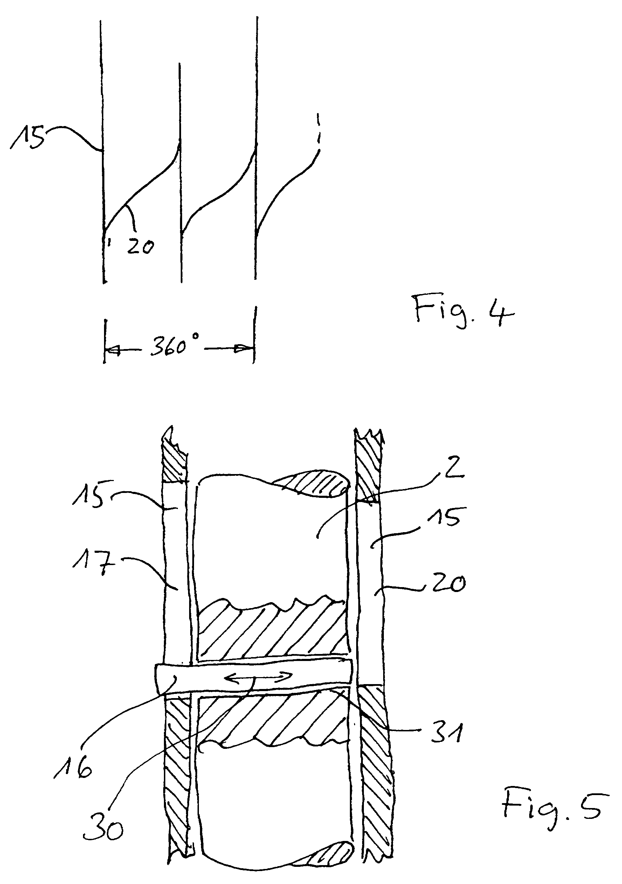

Wenn ein Schwenkwinkel insbesondere von 180° gefordert ist, kann mit Vorteil auf eine Weiche verzichtet werden, wie dies anhand Figur 4 erläutert wird.

In Figur 4 ist schematisch eine Abwicklung der Führungskurve 15 dargestellt. Die Drehrichtung der Spindel ist so gewählt, dass sich die Kulisse 16 beim Ausfahren an die linke Seite der Führungskurve 15 anlegt. Beim Einfahren ist es dann umgekehrt. Dadurch läuft die Kulisse 16 selbsttätig beim Einfahren in den zweiten Zweig 20 ein, ohne dass eine Weiche notwendig wäre. Die Schwenkrichtung beim Fahren von einer Stellung in die andere bleibt dabei erhalten.

Die Führungskurve 15 mit ihrem ersten Zweig 17 und ihrem zweiten Zweig 20 kann auch in zwei getrennte Kurven aufgeteilt werden, die von einer schaltbaren Kulisse durchfahren werden, die entweder in die eine oder in die andere Kurve eingreift. Die Umschaltung erfolgt in vorteilhafter Weise in den unteren Endpunkten der Verfahrwege. Auf eine Weiche kann dann ebenfalls mit Vorteil verzichtet werden.

Eine solche schaltbare Kulisse 16 ist in Figur 5 dargestellt. Die Kulisse 16 durchsetzt dabei die Stange 2, in der sie in einer Bohrung 31 in Richtung der Pfeile 30 verschieblich aufgenommen ist. Die Kulisse 16 wird wahlweise in ihrer unteren Endlage in die rechte oder linke Position verschoben, so dass sie entweder in den Zweig 15 oder in den Zweig 20 eingreift. Die Schaltung erfolgt durch zwei an dieser Stelle vorgesehene aber nicht gezeichnete Stellmagnete oder durch eine geeignete mechanische Umschaltung.

Auf diese Weise ist eine leicht an unterschiedliche Einbauverhältnisse konstruktiv anpassbare Anhängerkupplung geschaffen.

### Bezugszeichenliste:

- 1: Anhängerkupplung
- 2: Stange
- 3: unteres Ende
- 4: Kugel
- 5: Führungshülse
- 6: Bohrung
- 7: Innengewinde
- 8: Verstellspindel
- 9: Stirnradgetriebe
- 10: Befestigungsöffnung
- 11: Montageflansch
- 12: Konus
- 13: Gehäuse
- 14: Verriegelungsbolzen
- 15: Führungskurve
- 16: Kulisse
- 17: erster Zweig
- 18: Ort
- 19: Ort
- 20: zweiter Zweig
- 21: Weiche
- 22: Frelgabehebel
- 23: Achse
- 24: Weichenzunge
- 25: Achse
- 26: Auflaufkeil
- 27: Welle
- 28: Sperrklinke
- 29: Bund
- 30: Pfeile
- 31: Bohrung

## Patentansprüche

1. Anhängerkupplung (1) für Kraftfahrzeuge, mit einer Stange (2), an der sich üblicherweise eine Kugel (4) befindet, wobei die Stange (2) als bewegliches Teil zwischen zwei Endlagen, nämlich zwischen einer Ruhestellung und einer Betriebsstellung, mittels eines Motors axial in Richtung der Stange (2) verstellbar ausgebildet ist, wobei zwischen der Ruhestellung und der Betriebsstellung ein Schwenkwinkel vorgesehen ist, **dadurch gekennzeichnet, dass** die Ruhestellung und die Betriebsstellung eine Einfahrrichtung aufweisen, die gleichsinnig ausgebildet ist.

2. Anhängerkupplung nach Anspruch 1, **dadurch gekennzeichnet, dass** die Stange (2) einen Gesamtverstellweg aufweist, der größer ist als der axiale Abstand zwischen der Ruhestellung und der Betriebsstellung.

3. Anhängerkupplung nach Anspruch 1 oder 2, **dadurch gekennzeichnet, dass** die Stange (2) einen Schwenkwinkel um die Achse der Stange (2) von etwa 90° oder etwa 180° aufweist.

4. Anhängerkupplung nach einem oder mehreren der vorhergehenden Ansprüche, **dadurch gekennzeichnet, dass** die Stange (2) eine Achse aufweist, die etwa vertikal angeordnet ist.

5. Anhängerkupplung nach einem oder mehreren der vorhergehenden Ansprüche, **dadurch gekennzeichnet, dass** die Ruhestellung und die Betriebsstellung in derselben zu der Achse der Stange (2) senkrechten Ebene angeordnet sind.

6. Anhängerkupplung nach einem oder mehreren der vorhergehenden Ansprüche, **dadurch gekennzeichnet, dass** die Stange (2) um die Stangenachse eine Drehbewegung zwischen der Ruhestellung und der Betriebsstellung aufweist, die durch eine Kurve (15) geführt ausgebildet ist.

7. Anhängerkupplung nach einem oder mehreren der vorhergehenden Ansprüche, **dadurch gekennzeichnet, dass** getrennte Anschläge für die Ruhestellung und die Betriebsstellung vorgesehen sind.

8. Anhängerkupplung nach Anspruch 6 oder 7, **dadurch gekennzeichnet, dass** die Kurve (15) mindestens einen Abzweig (17, 20) aufweist.

9. Anhängerkupplung nach Anspruch 8, **dadurch gekennzeichnet, dass** am Ort (19) des Abzweigs (17, 20) eine Weiche (21) mit einer steuerbaren Führung vorgesehen ist.

10. Anhängerkupplung nach Anspruch 8, **dadurch gekennzeichnet, dass** die Führung mechanisch ist.

11. Anhängerkupplung nach einem oder mehreren der vorhergehenden Ansprüche, **dadurch gekennzeichnet, dass** eine Kulisse (16) vorgesehen ist, die gegebenenfalls schaltbar ausgebildet ist.

12. Anhängerkupplung nach einem oder mehreren der vorhergehenden Ansprüche, **dadurch gekennzeichnet, dass** die Drehrichtung der Stange (2) aus der Ruhestellung in die Betriebsstellung gleichsinnig ausgebildet ist.

13. Anhängerkupplung nach Anspruch 12, **dadurch gekennzeichnet, dass** für die axiale Verstellung der Stange (2) ein Spindel-Mutter-Trieb (7, 8) vorgesehen ist, dessen Drehrichtung der Spindel (8) beim Einfahren der Stange (2) dieselbe Richtung wie die Schwenkrichtung der Stange (2) aufweist.

14. Anhängerkupplung nach Anspruch 13, **dadurch gekennzeichnet, dass** ein Wellenende vorgesehen ist, an dem die Stange (2) mittels Handbetätigung verstellbar ist.

## Claims

1. Trailer coupling (1) for motor vehicles, having a rod (2) at which there is usually a ball (4), the rod (2) being formed as an axially movable part between two end positions, namely between a rest position and an operating position, in the direction of the rod (2) by means of a drive, a swivel angle being provided between the rest position and the operating position, **characterized in that** the rest position and the operating position comprise an incoming direction which is provided in the same direction.

2. Trailer coupling according to claim 1, **characterized in that** the rod (2) comprises a total adjusting range that is larger than the axial distance between the rest position and the operating position.

3. Trailer coupling according to claim 1 or 2, **characterized in that** the rod (2) comprises a swivel angle about the axis of the rod (2) of about 90° or approximately 180°.

4. Trailer coupling according to one or several of the previous claims, **characterized in that** the rod (2) comprises an axis which is approximately vertically arranged.

5. Trailer coupling according to one or several of the preceding claims, **characterized in that** the rest position and the operating position are arranged in the same plane being vertical to the axis of the rod (2).

6. Trailer coupling according to one or several of the preceding claims, **characterized in that** the rod (2) comprises a rotating movement about the rod axis between the rest position and the operating position which is provided by a guided curve (15).

7. Trailer coupling according to one or several of the preceding claims, **characterized in that** separate stops are provided for the rest position and the operating position.

8. Trailer coupling according to claim 6 or 7, **characterized in that** the curve (15) comprises at least one branch (17, 20).

9. Trailer coupling according to claim 8, **characterized in that** at the place (19) of the branch (17, 20) a points (21) with a controllable guide is provided.

10. Trailer coupling according to claim 8, **characterized in that** the guide is mechanical.

11. Trailer coupling according to one or several of the preceding claims, **characterized in that** a coulisse (16) is provided which is formed switchably, if applicable.

12. Trailer coupling according to one or several of the preceding claims, **characterized in that** the swivel direction of the rod (2) from the rest position into the operating position is formed in the same direction.

13. Trailer coupling according to claim 12, **characterized in that** a spindle-nut-drive (7, 8) is provided for the axial adjustment of the rod (2), the rotating direction of its spindle (8) during retraction having the same direction as the swivel direction of the rod (2).

14. Trailer coupling according to claim 13, **characterized in that** a shaft end is provided at which the rod (2) is manually adjustable.

## Revendications

1. Attelage de remorque (1) pour véhicule, avec une tige (2) sur laquelle se trouve comme cela est habituel une boule (4), la tige (2) ayant la forme d'une pièce mobile entre deux positions extrêmes, à savoir entre une position de repos et une position d'utilisation, réglable axialement en direction de la tige (2) à l'aide d'un moteur, un angle de pivotement étant prévu entre la position de repos et la position d'utilisation, **caractérisé en ce que** les directions d'entrée ver la position de repos et vers la position d'utilisation sont placées dans le même sens.

2. Attelage de remorque selon la revendication 1, **caractérisé en ce que** la tige (2) présente un chemin de déplacement total plus grand que la distance axiale entre la position de repos et la position d'utilisation.

3. Attelage de remorque selon la revendication 1 ou 2, **caractérisé en ce que** la tige (2) a un angle de pivotement autour de l'axe de la tige (2) d'environ 90° ou d'environ 180°.

4. Attelage de remorque selon l'une ou plusieurs des revendications précédentes, **caractérisé en ce que** la tige (2) présente un axe approximativement vertical.

5. Attelage de remorque selon l'une ou plusieurs des revendications précédentes, **caractérisé en ce que** la position de repos et la position d'utilisation sont disposées dans le même plan perpendiculaire à l'axe de la tige (2).

6. Attelage de remorque selon l'une ou plusieurs des revendications précédentes, **caractérisé en ce que** la tige (2) a un mouvement de rotation autour de l'axe de la tige entre la position de repos et la position d'utilisation, ledit mouvement de rotation suivant une courbe (15).

7. Attelage de remorque selon l'une ou plusieurs des revendications précédentes, **caractérisé en ce que** des butées distinctes sont prévues pour la position de repos et la position d'utilisation.

8. Attelage de remorque selon la revendication 6 ou 7, **caractérisé en ce que** la courbe (15) est munie d'au moins une dérivation (17, 20).

9. Attelage de remorque selon la revendication 8, **caractérisé en ce qu'**il est prévu au point (19) de la dérivation (17, 20) un embranchement (21) avec un guidage pouvant être commandé.

10. Attelage de remorque selon la revendication 8, **caractérisé en ce que** le guidage est mécanique.

11. Attelage de remorque selon l'une ou plusieurs des revendications précédentes, **caractérisé en ce qu'**il est prévu une coulisse (16) qui peut être le cas échéant manoeuvrée.

12. Attelage de remorque selon l'une ou plusieurs des revendications précédentes, **caractérisé en ce que** le sens de pivotement de la tige (2) de la position de repos à la position d'utilisation est le même.

13. Attelage de remorque selon la revendication 12, **caractérisé en ce qu'**il est prévu pour le réglage axial de la tige (2) une transmission par tige filetée-écrou (7, 8) dont le sens de rotation de la tige filetée (8) lors de la rentrée de la tige (2) est la même que le sens de pivotement de la tige (2).

14. Attelage de remorque selon la revendication 13, **caractérisé en ce que** une extrémité d'arbre est prévue sur laquelle la tige (2) peut être réglée manuellement.
